# EUROPEAN PATENT APPLICATION

(11) **EP 3 496 254 A1**
(43) Date of publication of application: **12.06.2019**
(21) Application number: 17205373.8
(22) Date of filing: 05.12.2017
(51) Int. Cl.: H02M 3/335, H02J 3/38, H02M 1/088

(54) **A CONTROL ARRANGEMENT FOR A POWER CONVERSION APPARATUS**

(71) Applicant: ABB Schweiz AG, 5400 Baden (CH)
(72) Inventor: Fiacchini, Gabriele, I-52024 Loro Ciuffenna (AR) (IT)
(74) Representative: De Bortoli, Eros

(57) **Abstract**

A control arrangement (1) for a power conversion apparatus, said control arrangement comprising a first section (A) operating at a non-intrinsically-safe voltage potentials, a second section (B) operating at intrinsically-safe voltage potentials, a galvanic barrier (GB) to electrically insulate said first and second sections one from another, a central control unit (5) to control the operation of said power conversion apparatus and arranged in said first section (A) and a communication interface arrangement (6) to allow said central control unit to communicate with external computerised resources (201, 202).

## Description

The present invention relates to the field of the electric power generation plants. More particularly, the present invention relates to a control arrangement for the power conversion apparatus of an electric power generation plant.

As is known, electric power generation plants (e.g. photovoltaic plants) include a number (even hundreds or thousands) of power conversion apparatuses (e.g. photovoltaic inverters) operatively associated to corresponding electric power generation apparatuses (e.g. photovoltaic panels or photovoltaic strings).

Normally, each power conversion apparatus is equipped with a corresponding control arrangement including a central control unit to carry out suitable control functionalities to control the operation of said apparatus.

Generally, the central control unit is fed by an auxiliary power supply harvesting electric power from the electric power generation apparatus to which the power conversion apparatus is operatively associated.

Said central control unit thus operates at voltage potentials (e.g. even some kV) dangerous to a user in case of faults and, for this reason, it is normally arranged in a section of the control arrangement, which cannot be directly accessed by a user.

In modern power conversion apparatuses, the above-mentioned central control unit is designed to communicate with external computerised resources to carry out its control functionalities.

Such external computerised resources may include control units of other power conversion apparatuses, local or remote supervising controllers, remote control platforms (e.g. operating at cloud level), and the like.

In order to ensure a suitable connectivity of its central control unit with these external computerised resources, the control arrangement of a power conversion apparatus is typically provided with a number of communication ports or modules, each interacting with the central control unit through a suitable communication bus and a corresponding external computerised resource through a suitable wired or wireless communication channel.

As they are accessible to a user, said communication ports or modules are normally arranged in a section of the control arrangement, which operates at SELV (Safety Extra-Low Voltage) potentials and it is electrically insulated from other parts of the control arrangement (e.g. the section including the central control unit) operating at hazardous voltage potentials by a galvanic barrier.

Known interface arrangements to operatively couple the above-mentioned communication ports or modules with the central control unit and, whenever necessary, to feed said communication ports or modules passing through said galvanic barrier are still unsatisfactory from an industrial point of view, as they are often complex to manufacture.

Additionally, these traditional interface arrangements show poor versatility in use as their design is strictly linked to the number and type of communication ports or modules to be coupled with the central control unit.

As it is easy to understand, the above-mentioned drawbacks may imply high costs to realize these control arrangements at industrial level.

In the state of the art, it is quite felt the need for alternative solutions allowing the above-mentioned drawbacks to be overcome or mitigated.

In order to response to this need, the present invention provides a control arrangement according to the following claim 1 and the related dependent claims.

The control system, according to the present invention, is directed to control the conversion apparatus on an electric power generation plant.

Preferably, said power conversion apparatus is a photovoltaic inverter and said electric power generation plant is a photovoltaic plant.

In a general definition, the control arrangement, according to the present invention comprises a first section operating at a non-intrinsically-safe voltage potentials, a second section operating at intrinsically-safe voltage potentials, a galvanic barrier to electrically insulate said first and second sections one from another, a central control unit to control the operation of said power conversion apparatus and arranged in said first section and a communication interface arrangement coupled with said central control unit to communicate with external computerised resources.

The control arrangement, according to the present invention, further comprises:
- a connectivity control unit to manage the connectivity of said central control unit with said external computerised resources, said connectivity control unit being arranged in said first section;
- a first bus interface unit to provide a high-speed galvanically insulated bus interface between communication buses connected thereto, said first bus interface unit being arranged at said galvanic barrier;
- a first communication bus operatively coupled with said central control unit and said connectivity control unit, said first communication bus being arranged in said first section;
- a second high-speed communication bus operatively coupled with said connectivity control unit and said first bus interface unit, said second communication bus being arranged in said first section;
- a third high-speed communication bus operatively coupled with said first bus interface unit, said third communication bus being arranged in said second section.

Preferably, said first bus interface unit comprises:
- a first bus port and a second bus port coupleable with said second communication bus and said third communication bus, respectively;
- a first wireless short-range transceiver and a second wireless short-range transceiver respectively coupled with said first bus port and said second bus port, said first and second wireless short-range transceivers operating in the frequency range of millimetric waves and being arranged mutually spaced and separated by said galvanic barrier.

Preferably, the communication interface arrangement, according to the present invention, comprises a second bus interface unit to provide an interface between communication buses connected thereto, said second bus interface unit being coupled with said third communication bus and arranged in said second section.

Preferably, the communication interface arrangement, according to the present invention, comprises one or more communication ports or modules for communication with corresponding external computerised resources, said first communication ports or modules being arranged in said second section.

According to some embodiments of the invention, the communication interface arrangement comprises one or more fourth communication buses coupled with said second bus interface unit and corresponding first communication port or modules, said fourth communication buses being arranged in said second section.

According to some embodiments of the invention, the communication interface arrangement comprises one or more third bus interface units to provide an interface between communication buses connected thereto, one or more fourth communication buses coupled with said second bus interface unit and corresponding third bus interface units, said fourth communication buses being arranged in said second section, and one or more fifth communication buses coupled with said corresponding third interface units and corresponding first communication port or modules, said fifth communication buses being arranged in said second section.

According to some embodiments of the invention, the communication interface arrangement comprises one or more second communication ports or modules directly coupled with said third communication bus and arranged in said second section.

Preferably, the control arrangement, according to the invention, comprises a first power supply unit electrically coupleable with an external power source to provide a non-intrinsically-safe power supply voltage to feed one or more components of said first section, said first power supply unit being arranged in said first section.

Preferably, the control arrangement, according to the invention, comprises a power interface arrangement coupled with said first power supply unit to feed one or more components of said second section.

Preferably, said power interface arrangement comprises:
- a second power supply unit to provide an intrinsically-safe power supply voltage to feed one or more components of said second section, said second power supply unit being arranged in said second section;
- a power interface unit to provide a galvanically insulated bus interface between power buses connected thereto, said power interface unit being arranged at said galvanic barrier;
- a first power bus operatively coupled with said first power supply unit and said power interface unit, said first power bus being arranged in said first section;
- a second power bus operatively coupled with said power interface unit and said second power supply unit, said second power bus being arranged in said second section.

According to some embodiments of the invention, the control arrangement comprises:
- a first control board including at least said central control unit, said first communication bus, said connectivity control unit, a first bus connector and a first portion of said second communication bus coupled with said connectivity control unit and said first bus connector;
- a second control board including at least said third communication bus, said galvanic barrier, said bus interface unit, a second bus connector and a second portion of said second communication bus coupled with said bus interface unit and said second bus connector.

Preferably, said first and second bus connectors are removably connectable one to another.

Preferably, said second control board includes said second bus interface unit, said one or more communication ports or modules and, possibly, said one or more fourth communication buses, said one or more third bus interface units and said one or more fifth communication buses.

Preferably, said first control board includes said first power supply unit, a first power connector and a first portion of said first power bus coupled with said first power supply unit and said first power connector.

Preferably, said second control board includes said second power supply unit, said second power bus, said power interface unit, a second power connector and a second portion of said first power bus coupled with said power interface unit and said second power connector.

Preferably, said first and second power connectors are removably connectable one to another. Further characteristics and advantages of the present invention shall emerge more clearly from the description of preferred but not exclusive embodiments illustrated purely by way of example and without limitation in the attached drawings, in which:
Figure 1 schematically illustrates an embodiment of the control arrangement, according to the invention;
Figure 2 schematically illustrates a further embodiment of the control arrangement, according to the invention;
Figures 3-5 schematically illustrate some parts of the control the control arrangement, according to the invention.

With reference to the mentioned figures, the present invention relates to a control arrangement 1 for controlling the power conversion apparatus of a low voltage electric power generation plant.

For the sake of clarity, it is specified that the term "low voltage" refers to operating voltages lower than 1 kV AC and 1.5 kV DC.

In principle, the above-mentioned power conversion apparatus may be of any type.

The control arrangement 1 is however particularly suitable for controlling the operation of a photovoltaic inverter of a photovoltaic plant and will be described with particular reference to this application without intending to limit the scope of the invention.

The control arrangement 1 comprises a first section A operating at non-intrinsically-safe voltage potentials and a second section B operating at intrinsically-safe voltage potentials. For the sake of clarity, it is specified that:
- the terms "non-intrinsically-safe voltage potential" or "non-intrinsically-safe voltage" refer to voltage potentials or voltages that may be dangerous to a user in case of fault. These voltage potentials or voltages are those typical of the operation of the power conversion apparatus and they may reach values up to some kV (e.g. 1 kV);
- the term "intrinsically-safe voltage potential" or "intrinsically-safe voltage" refer to so-called ELV (Extra-Low Voltage) potentials or voltages or, more preferably, to so-called SELV (Safety Extra-Low Voltage) potentials or voltages, which commonly available regulations consider safe to a user, even in case of fault. These voltage potentials or voltages may reach values up to tens of V at most (e.g. 50 V AC and 120 V DC), even in presence of faults.

The control arrangement 1 comprises a galvanic barrier GB to electrically insulate the first and second sections A, B one from another.

The galvanic barrier GB is conveniently adapted to withstand high-voltage differences between said first and second sections, i.e. voltage differences up to some kV (e.g. 5 kV).

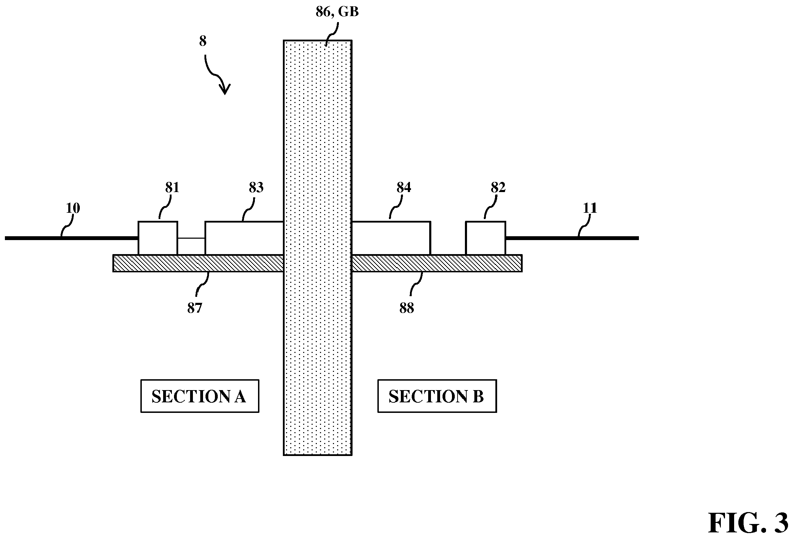

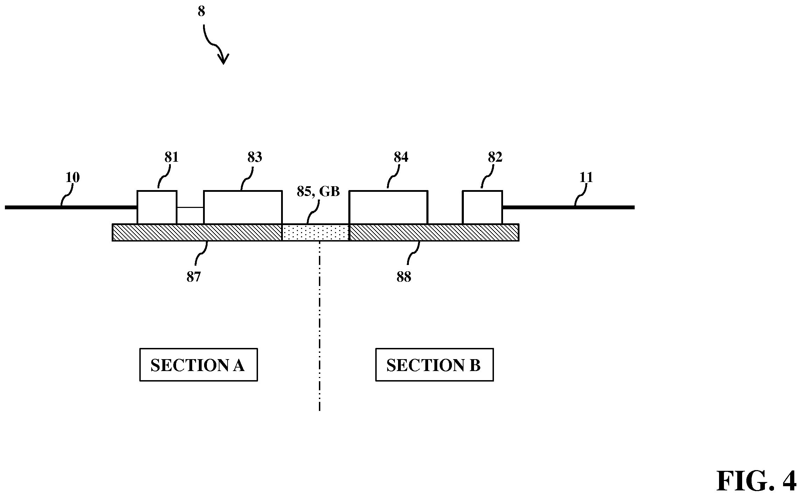

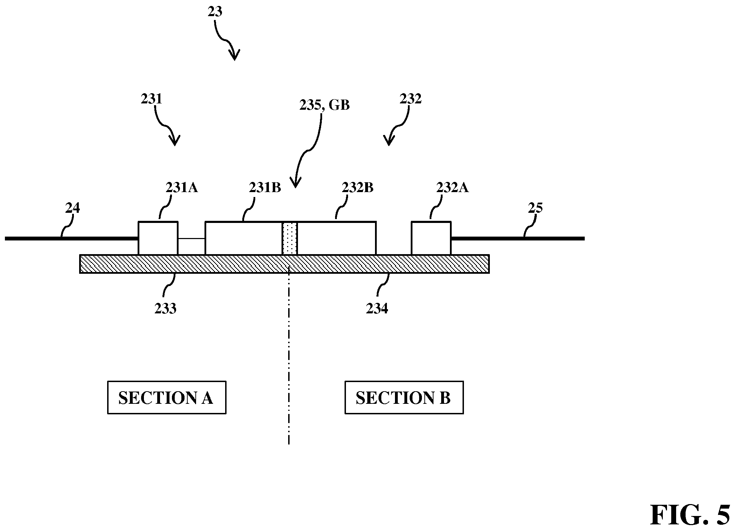

As an example, the galvanic barrier GB may comprise an insulating wall 86 (figure 3), e.g. a wall of an insulating case surrounding the section A, or an insulating portion 85 (figure 4) of a circuit board on which the components of the control arrangement 1 are mounted or a transformer 235 electrically coupling suitable components of the sections A, B (figure 5). The control arrangement 1 comprises a central control unit 5 to control the operation of the power conversion apparatus.

Preferably, the central control unit 5 is an electronic device including digital processing resources (e.g. a DSP and/or a microprocessor) capable of executing suitable sets of software instructions stored in a medium to carry out the requested functionalities.

The control functionalities implemented by the central control unit 5 may include, for example, managing the acquisition of values of physical quantities to be controlled for operating the power conversion apparatus, carrying out computations related to control loops for operating the power conversion apparatus, providing control signals for driving electronic units or devices of the power conversion apparatus, managing inputs/outputs of the power conversion apparatus, processing data/information to be exchanged with other computerised resources arranged at local or remote level, and the like.

In order to carry out its functionalities, the central control unit 5 needs to communicate with external computerised resources 201, 202 to carry out its control functionalities.

The external computerised resources 202, 202 may be in principle of any type. As an example, they may include control units of other power conversion apparatuses, local or remote supervising controllers, remote control platforms (e.g. operating at cloud level), and the like.

The control arrangement 1 comprises a communication interface arrangement 6 to allow the central control unit 5 to communicate with the external computerised resources 201, 202. The communication interface arrangement 6 comprises a connectivity control unit 7 to control the connectivity of the central control unit 5 with the external computerised resources 201, 202.

Preferably, the connectivity control unit 7 is an electronic device including digital processing resources (e.g. a DSP and/or a microprocessor) capable of executing suitable sets of software instructions stored in a medium to carry out the requested functionalities.

The connectivity control functionalities implemented by the connectivity control unit 7 may include, for example, interacting with the central control unit and communication ports or modules to communicate with selected external computerised resources, dispatching data/information to said central control unit and said selected external computerised resources, interacting with said selected external computerised resources using the communication protocols required by these latter, e.g. to implement a network of controllers, to carry out commissioning activities foreseen for the power conversion apparatus, to carry out service or maintenance activities foreseen for the power conversion apparatus, or the like. The central control unit 5 is adapted to interact with the downstream components of the communication interface arrangement 6 (and the external resources 201, 202) through a single communication channel.

The communication interface arrangement 6 comprises a first communication bus 9 operatively coupled with the central control unit 5 and the connectivity control unit 7, more precisely coupled with an output port of the control unit 5 and an input port of the connectivity control unit 7.

Preferably, the first communication bus 9 is a communication bus of the RS-485 type, CAN, SPI, UART, USB, or the like.

In principle, the first communication bus 9 may be of wired or wireless type, according to the needs. Preferably, however, it is of the wired type.

Also the connectivity control unit 7 is adapted to interact with the downstream components of the communication interface arrangement 6 (and the external resources 201, 202) through a single communication channel.

The communication interface arrangement 6 comprises a second communication bus 10 coupled with the connectivity control unit 7, conveniently with a suitable output port of this latter.

The second communication bus 10 is a high-speed communication bus, i.e. adapted to implement a bi-directional data transmission with bit-rates in the range of hundreds of Mbit/s, e.g. with a bit-rate of 480 Mbit/s or higher.

Preferably, the second communication bus 10 is a communication bus of the USB or PCIe type and implements a communication protocol determined by the connectivity control unit 7 depending on the external computerised resources interacting therewith.

Preferably, the communication protocols implemented by the second communication bus 10 are high-level communication protocols, e.g. Sunspec, TCP/IP, MODBUS or other proprietary communication protocols.

In principle, the second communication bus 10 may be of wired or wireless type, according to the needs. Preferably, however, the communication bus 10 is of the wired type.

The central control unit 5, the connectivity control unit 7, the first communication bus 9 and the second communication bus 10 are arranged in the first section A of the control arrangement 1. Therefore, these components operate at non-intrinsically-safe voltage potentials.

The communication interface arrangement 6 comprises a first bus interface unit 8 to provide a high-speed galvanically insulated bus interface between communication buses 10, 11 connected thereto.

Conveniently, the first bus interface unit 8 is arranged at the galvanic barrier GB and it comprises a portion arranged in the first section A, thereby operating at non-intrinsically-safe voltage potentials, and a portion arranged in the second section B, thereby operating at intrinsically-safe voltage potentials.

The first bus interface unit 8 is adapted to withstand high-voltage differences, i.e. voltage differences up to some kV (e.g. 5 kV).

The first bus interface unit 8 is a high-speed bus interface, i.e. adapted to implement a bi-directional data transmission with bit-rates in the range of hundreds of Mbit/s, e.g. with a bit-rate of 480 Mbit/s or higher.

The second communication bus 10 is coupled with the first bus interface 8, conveniently with an input port of this latter.

The communication interface arrangement 6 comprises a third communication bus 11 coupled with the first bus interface unit 8, conveniently with an output port of this latter.

The third communication bus 11 is a high-speed communication bus, i.e. adapted to implement a bi-directional data transmission with bit-rates in the range of hundreds of Mbit/s, e.g. with bit-rates of 480 Mbit/s or higher.

Similarly, to the communication bus 10, the third communication bus 11 is preferably a communication bus of the USB or PCIe type and implements a communication protocol determined by the connectivity control unit 7 depending on the external computerised resources interacting therewith.

Preferably, the communication protocols implemented by the third communication bus 11 are high-level communication protocols, e.g. Sunspec, TCP/IP, MODBUS or other proprietary communication protocols.

In principle, the third communication bus 11 may be of wired or wireless type, according to the needs. Preferably, however, the communication bus 11 is of the wired type.

The third communication bus 11 is arranged in the second section B of the control arrangement 1 and it therefore operates at intrinsically-safe voltage potentials.

As it is evident from the above, the first bus interface unit 8 conveniently allows the central control unit 5 and the connectivity control unit 7 to communicate with the external computerised resources 201, 202 by means of a single communication channel passing through the galvanic barrier GB.

A first portion of such communication channel (formed by the communication buses 9, 10) operates at non-intrinsically-safe voltage potentials whereas a second portion of such communication channel (formed by the communication bus 11) operates at intrinsically-safe voltage potentials.

The adoption of a single communication bus is quite advantageous as it allows simplifying the communication interface layout and reducing the number of bus interfaces to pass through the galvanic barrier GB with respect to the commonly available solutions.

According to some embodiments of the invention, the first bus interface unit 8 is adapted to provide a wired interface between communication buses 10, 11 connected thereto. As an example, the first bus interface unit 8 may be a high-speed digital isolator of the USB or PCIe type.

According to other embodiments of the invention (figures 3, 4), the first bus interface unit 8 is adapted to provide a wireless interface between communication buses 10, 11 connected thereto.

In this case, the first bus interface unit 8 preferably comprises:
- a first bus port 81 and a second bus port 82 coupleable with the second communication bus 10 and the third communication bus 11, respectively;
- a first wireless short-range transceiver 83 and a second wireless short-range transceiver 84 coupled with the first bus port 81 and the second bus port 82, respectively.

For the sake of clarity, the term "short range" is referred to distances of few mm, e.g. 5-25 mm.

The transceivers 82, 84 are adapted to operate in the frequency range of millimetric waves. They are thus adapted to implement a bi-directional data transmission with carrier frequencies in the range of tens of GHz, e.g. 60 GHz or higher.

The wireless transceivers 82, 84 are arranged spaced one from another and are separated by the galvanic barrier GB.

Preferably, the first bus port 81 and the first transceiver 83 are mounted on a first circuit board portion 87 arranged in the first section A whereas the seconds bus port 81 and the second transceiver 84 are mounted on a second circuit board portion 88 arranged in the second section B .

According to the embodiment of figure 3, the transceivers 82, 84 are separated by an insulating wall 86 8e.g a wall of an insulating case at least partially surrounding the section A), which forms the galvanic barrier GB.

According to the embodiment of figure 4, the first bus interface unit 8 comprises an insulating circuit board portion 85 separating the circuit board portions 87, 88 and thereby forming the galvanic barrier GB.

According to some embodiments of the invention, the communication interface arrangement 6 comprises a second bus interface unit 12 to provide an interface between communication buses 11, 14 connected thereto.

The second bus interface unit 12 is adapted to couple the communication bus 11 with a selectable fourth communication bus 14 and it may be formed by a bus switching device, a bus replicator device or another device of similar type.

The second bus interface unit 12 is coupled with the third communication bus 11.

Preferably, the communication interface arrangement 6 comprises one or more fourth communication buses 14, each coupled with the second bus interface unit 12.

Preferably, the fourth communication buses 14 are communication buses of the USB or PCIe type and implement a communication protocol determined by the connectivity control unit 7 depending on the external computerised resources interacting therewith.

Preferably, the communication protocols implemented by the fourth communication buses 14 are high-level communication protocols, e.g. Sunspec, TCP/IP, MODBUS or other proprietary communication protocols.

In principle, the fourth communication buses 14 may be of wired or wireless type, according to the needs. Preferably, however, they are of the wired type.

Preferably, the communication interface arrangement 6 comprises one or more communication ports or modules 13, 15 for communication with corresponding first external computerised resources 201, 202.

In principle, the communication ports or modules 13, 15 may be of any type and are each capable to communicate with a corresponding external computerised resource 201, 202 through a suitable communication channel of the wired or wireless type.

As an example, the communication ports or modules 13, 15 may include wired ports, e.g. LAN, UART, USB ports and the like, or wireless communication modules e.g. Wi-Fi, Bluetooth, Zigbee communication modules and the like.

According to some embodiments of the invention, one or more of the fourth communication buses 14 are directly coupled with corresponding first communication ports or modules 13. This solution may be conveniently implemented when the communication buses 14 are compatible with the corresponding first communication ports or modules 13, in such a way that a direct coupling between a communication bus 14 and a corresponding communication port or module 13 is possible.

According to some embodiments of the invention, one or more of the fourth communication buses 14 are indirectly coupled with corresponding first communication ports or modules 13. This solution may be conveniently implemented when the fourth communication buses 14 are not compatible with the communication ports or modules 13 in such a way that a direct coupling between a communication bus 14 and a corresponding communication port or module 13 is not possible.

In this case, the communication interface arrangement 6 preferably comprises:
- one or more third bus interface units 17 to provide an interface between communication buses connected thereto;
- one or more fourth communication buses 14, each coupled with the second bus interface unit 12 and a corresponding third interface unit 17;
- one or more fifth communication buses 16, each coupled with a corresponding third interface unit 17 and a corresponding first communication port or module 13.

Preferably, the fifth communication buses 16 are fully compatible with the respective communication ports or modules 13 connected thereto.

Preferably, the third bus interface units 17 are bus converters to mutually couple communication buses of different types.

Preferably, the communication interface arrangement 6 comprises one or more second communication ports or modules 15 directly coupled with the third communication bus 11.

Conveniently, the second bus interface unit 12, the fourth communication buses 14, the third interface units 17, the fifth communication buses 16 and the first and second communication ports or modules 13, 15 are arranged in the second section B. Therefore, the components operate at intrinsically safe voltage potentials.

Preferably, the control arrangement 1 comprises a first power supply unit 21 arranged in the first section A and adapted to provide a first non-intrinsically-safe power supply voltage VI to feed one or more control components of said first section A, e.g. the central control unit 5 and the connectivity control unit 7.

Preferably, the first power supply unit 21 is fed by an external power source 300, e.g. an electric line (e.g. of the AC type) operatively associated with the power conversion apparatus. Preferably, the control arrangement 1 comprises a power interface arrangement 20 coupled with the first power supply unit 21 to feed one or more components of the second section B, e.g. the second bus interface unit 12, one or more third bus interface units 17, one or more first and second communication ports or modules 13, 15.

Preferably, the power interface arrangement 20 comprises a second power supply unit 22 arranged in the second section B and adapted to provide a second intrinsically-safe power supply voltage V2 to feed one or more control components of said second section B. Preferably, the power interface arrangement 20 comprises:
- a power interface unit 23 to provide a galvanically insulated bus interface between power buses 24, 25 connected thereto;
- a first power bus 24 operatively coupled with the first power supply unit 21 and the power interface unit 23;
- a second power bus 25 operatively coupled with the power interface unit 23 and the second power supply unit 22.

Conveniently, the power interface unit 23 is arranged at the galvanic barrier GB, the first power bus 24 is arranged in the first section A and the second power bus 25 is arranged in the second section B.

Preferably, the first and second power buses 24, 25 are formed by respective power supply lines, e.g. of the DC type.

Preferably, the power interface unit 23 comprises a first power interface unit 231 and a second power interface unit 232 electrically coupled with the first and second power buses 24, 25, respectively, and electrically insulated one from another by the galvanic barrier GB.

Conveniently, the first power interface unit 231 and the second power interface unit 232 are mounted on a third circuit board portion 233 arranged in the first section A and on a fourth circuit board portion 234 arranged in the second section B, respectively.

Preferably, the first power interface unit 231 includes a DC/AC converter 231A, the output of which is electrically coupled with a primary winding 231B of a voltage transformer 235. Preferably, the second power interface unit 232 includes an AC/DC converter 232, the input of which is electrically coupled with a secondary winding 232B of the voltage transformer 235.

Preferably, the voltage transformer 235 forms the galvanic barrier GB electrically insulating the first and second power interface units 231, 232.

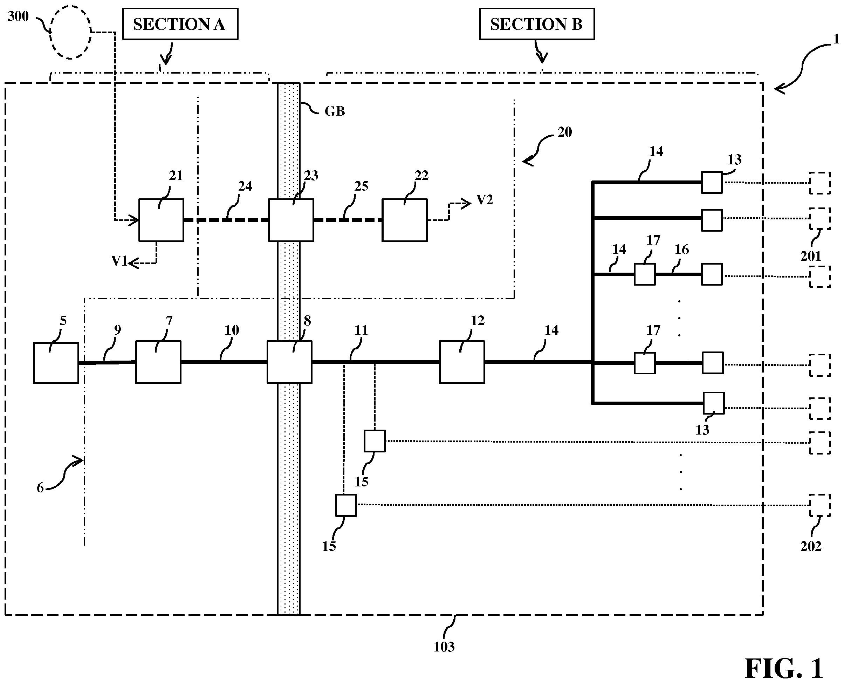

According to the embodiment of figure 1, the control arrangement 1 comprises a single control board 103, in which the above-described components of the control arrangement are included.

Conveniently, the control board 103 may be a printed circuit board of known type and the included components may be mounted according to well-known techniques, e.g. surface mounting techniques.

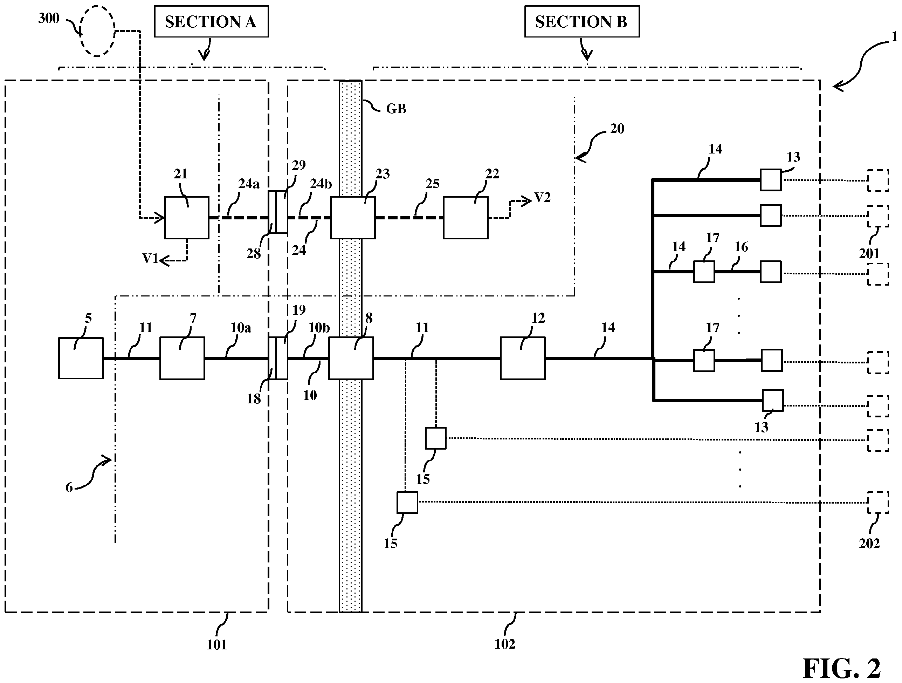

Preferably, according to the embodiment shown in figure 2, the control arrangement 1 comprises a first control board 101 and a second control board 102, which are removably coupleable on to another.

In this case, the control arrangement 1 conveniently comprises a first bus connector 18 and a second bus connector 19, which are removably connectable one to another.

Preferably, when it is provided with a power interface arrangement 20, the control arrangement 1 is also provided with a first power connector 28 and a second power connector 29, which are removably connectable one to another.

The first and second control boards 101, 102 may be coupled or decoupled one to or from another by coupling or decoupling the first and second bus connectors 18, 19 and, when present, the first and second power connectors 28, 29.

Preferably, the central control unit 5, the first communication bus 9, the connectivity control uni 7, the first bus connector 18 and a first portion 10a of the second communication bus 10, which is coupled with the connectivity control unit 7 and the first bus connector 18, are included in the first control board 1.

Preferably, when the control arrangement 1 is provided with a power interface arrangement 20, the first power supply unit 21, the first power connector 28 and a first portion 24a of the first power bus 24, which is coupled with the first power supply unit 21 and the first power connector 28, are included in the first control board 101.

Preferably, at least the third communication bus 11, the galvanic barrier GB, the bus interface unit 8, the second bus connector 19 and a second portion 10b of the second communication bus 10, which is coupled between the first bus interface unit 8 and the second bus connector 29, are included in the second control board 102.

Preferably, also the second bus interface unit 12, the first communication ports or modules 13, the second communication ports or modules 15, the fourth communication buses 14 and, possibly, the bus converters 17 and the fifth communication buses 16 are included in the second control board 102.

Preferably, when the control arrangement 1 is provided with a power interface arrangement 20, the second power supply unit 22, the second power bus 25, the power interface unit 23, the second power connector 29 and a second portion 24b of the first power bus 24, which is coupled between the power interface unit 23 and the second power connector 29, are included in the second control board 102.

Conveniently, the control boards 101, 102 may be printed circuit boards of known type and the included components may be mounted according to well-known techniques, e.g. surface mounting techniques.

The control arrangement 1, according to the invention, provides relevant advantages with respect to known arrangements for controlling a power conversion apparatus.

The adoption of a connectivity control unit 7, which is specifically designed to manage the connectivity of the central control unit 5 with the available external computerised resources 201-202, allows simplifying the interaction of the central control unit 5 with said external computerised resources.

Additionally, the connectivity control unit 7, possibly in cooperation with the second and third bus interface units 12 and 17, allows further simplifying the management of the communication ports and modules 13, 15 independently of the type and layout of these latter.

The adoption of a single communication channel (first and second communication buses 10, 11) and, possibly, of a single power channel (first and second power buses 24, 25) passing through the galvanic barrier GB allows reducing the overall number of the components while obtaining an effective electrical insulation between the first and second sections A, B.

The interface communication and power arrangements 6, 20 have thus a simplified design with respect to the interface arrangements commonly available in the state of the art, thereby being less expensive to manufacture at industrial level.

The control arrangement 1 has a modular layout ensuring a high level of flexibility in use. Additional communication ports and modules 13, 15 may in fact be installed or removed without involving the central control unit 5, the connectivity control unit 7 and the communication buses 9, 10, 11.

The adoption of distinct control boards removably connectable one to another allows further increasing the versatility of the control arrangement 1.

The basic components of the control arrangement 1, such as the central control unit 5, the connectivity control unit 7 and the related communication buses 9, 10a may be conveniently arranged on the first control board 101, which can thus be manufactured independently of the connectivity arrangements required for the central control unit 5.

On the other hand, the remaining components of the control arrangement 1, such as the second bus interface unit 12, the third bus interface units 17, the first and second communication ports and modules 13, 15 and the related communication buses 10b, 14, 15 may be conveniently arranged on the second control board 102, which can thus be customized depending on the connectivity arrangements required for the central control unit 5.

As it is easy to understand, the above-described advantages allows remarkably reducing the fixed production costs of the control arrangement 1, which can thus be manufactured in a modular way, which particularly suitable to meet the installation and commissioning requirements specifically provided for said control arrangement.

The control arrangement 1 is thus relatively simple and cheap to manufacture at industrial level.

## Claims

1. A control arrangement (1) for a power conversion apparatus, said control arrangement comprising:
- a first section (A) operating at a non-intrinsically-safe voltage potentials;
- a second section (B) operating at intrinsically-safe voltage potentials;
- a galvanic barrier (GB) to electrically insulate said first and second sections one from another;
- a central control unit (5) to control the operation of said power conversion apparatus and arranged in said first section (A);
- a communication interface arrangement (6) coupled with said central control unit to communicate with external computerised resources (201, 202);
**characterised in that** said communication interface arrangement comprises:
- a connectivity control unit (7) to manage connectivity of said central control unit with said external computerised resources, said connectivity control unit being arranged in said first section (A);
- a first bus interface unit (8) to provide a high-speed galvanically insulated bus interface between communication buses connected thereto, said first bus interface unit being arranged at said galvanic barrier (GB);
- a first communication bus (9) operatively coupled with said central control unit and said connectivity control unit, said first communication bus being arranged in said first section (A);
- a second high-speed communication bus (10) operatively coupled with said connectivity control unit and said first bus interface unit, said second communication bus being arranged in said first section (A);
- a third high-speed communication bus (11) operatively coupled with said first bus interface unit, said third communication bus being arranged in said second section (B).

2. A control arrangement, according to claim 1, **characterised in that** said communication interface arrangement (6) comprises a second bus interface unit (12) to provide an interface between communication buses connected thereto, said second bus interface unit being coupled with said third communication bus (11) and arranged in said second section (B).

3. A control arrangement, according to one of the previous claims, **characterised in that** said communication interface arrangement (6) comprises one or more communication ports or modules (13, 15) for communication with corresponding external computerised resources (201, 202), said communication ports or modules being arranged in said second section (B).

4. A control arrangement, according to claim 3, **characterised in that** said communication interface arrangement (6) comprises one or more fourth communication buses (14) coupled with said second bus interface unit (12) and corresponding first communication port or modules (13), said fourth communication buses being arranged in said second section.

5. A control arrangement, according to one of the claims from 3 to 4, **characterised in that** said communication interface arrangement (6) comprises:
- one or more third bus interface units (17) to provide an interface between communication buses connected thereto;
- one or more fourth communication buses (14) coupled with said second bus interface unit (12) and corresponding third bus interface units, said fourth communication buses being arranged in said second section;
- one or more fifth communication buses (16) coupled with said corresponding third interface units and with corresponding first communication port or modules (13), said fifth communication buses being arranged in said second section (B).

6. A control arrangement, according to one of the claims from 3 to 5, **characterised in that** said communication interface arrangement (6) comprises one or more second communication ports or modules (15) directly coupled with said third communication bus (11) and arranged in said second section (B).

7. A control arrangement, according to one of the previous claims, **characterised in that** it comprises:
- a first power supply unit (21) electrically coupleable with an external power source (300) to provide a non-intrinsically-safe power supply voltage (V1) to feed one or more components of said first section (A), said first power supply unit being arranged in said first section (A);
- a power interface arrangement (20) coupled said first power supply unit to feed one or more components of said second section (B).

8. A control arrangement, according to claim 7, **characterised in that** said power interface arrangement (20) comprises:
- a second power supply unit (22) to provide an intrinsically-safe power supply voltage (V2) to feed one or more components of said second section (B), said second power supply unit being arranged in said second section (B);
- a power interface unit (23) to provide a galvanically insulated bus interface between power buses connected thereto, said power interface unit being arranged at said galvanic barrier (GB);
- a first power bus (24) operatively coupled with said first power supply unit and said power interface unit, said first power bus being arranged in said first section (A);
- a second power bus (25) operatively coupled with said power interface unit and said second power supply unit, said second power bus being arranged in said second section (B).

9. A control arrangement, according to one of the previous claims, **characterised in that** it comprises:
- a first control board (101) including at least said central control unit (5), said first communication bus (9), said connectivity control unit (7), a first bus connector (18) and a first portion (10a) of said second communication bus (10) coupled with said connectivity control unit and said first bus connector;
- a second control board (102) including at least aid third communication bus (11), said galvanic barrier (GB), said bus interface unit (8), a second bus connector (19) and a second portion (10b) of said second communication bus (10) coupled with said bus interface unit and said second bus connector;
wherein said first and second bus connectors are removably connectable one to another.

10. A control arrangement, according to claims 2 and 9, **characterised in that** said second control board (102) includes said second bus interface unit (12).

11. A control arrangement, according to claims 3 and 9, **characterised in that** said second control board (102) includes said communication ports or modules (13).

12. A control arrangement, according to claims 4, 5 and 9, **characterised in that** said second control board (102) includes said third bus interface units (17), said fourth communication buses (14) and said fifth communication buses (16).

13. A control arrangement, according to the claims from 7 to 9, **characterised in that**:
- said first control board (101) includes said first power supply unit (21), a first power connector (28) and a first portion (24a) of said first power bus (24) coupled with said first power supply unit and said first power connector;
- said second control board (102) includes said second power supply unit (22), said second power bus (25), said power interface unit (23), a second power connector (29) and a second portion (24b) of said first power bus (24) coupled with said power interface unit and said second power connector;
wherein said first and second power connectors are removably connectable one to another.

14. A control arrangement, according to one of the previous claims, **characterised in that** said first bus interface unit (8) comprises:
- a first bus port (81) and a second bus port (82) coupleable with said second communication bus (10) and said third communication bus (11), respectively;
- a first wireless short-range transceiver (83) and a second wireless short-range transceiver (84) respectively coupled with said first bus port and said second bus port, said first and second wireless short-range transceivers operating in the frequency range of millimetric waves and being arranged mutually spaced and separated by said galvanic barrier (GB).

15. A power conversion apparatus **characterised in that** it comprises a control arrangement (1), according to one of the previous claims.

16. A power conversion apparatus, according to claim 15, **characterised in that** it is a photovoltaic inverter.
